# EUROPEAN PATENT APPLICATION

(11) **EP 1 422 803 A1**
(43) Date of publication of application: **26.05.2004**
(21) Application number: 02751192.2
(22) Date of filing: 24.07.2002
(51) Int. Cl.: H02J 1/10, B60R 16/02

(54) **ELECTRICAL DISTRIBUTION SYSTEM AND METHOD FOR A VEHICLE WITH TWO NETWORKS HAVING DIFFERENT VOLTAGE LEVELS**

(30) Priority: 08.08.2001 ES 200101869
(71) Applicant: Lear Automotive (EEDS) Spain, S.L., 43800 Valls, Tarragona (ES)
(72) Inventor: BORREGO BEL, Carles, E-43800 Valls (Tarragona) (ES); FONTANILLES PINAS, Joan, E-43800 Valls (Tarragona) (ES); FIGUEROLA, Gabriel, E-43800 Valls (Tarragona) (ES)
(74) Representative: Primo de Rivera y Urquijo, Jose Antonio
(86) International application number: PCT/ES2002/000373
(87) International publication number: WO 2003/015235

(57) **Abstract**

It consists of an architecture with a network r1, fed from another network r2, or vice versa, by a CC/CC converter, with network r2 connected to a generator G and feeding a starter motor S, and both networks r1, r2 connected to corresponding batteries B1, B2, comprising several equal CC/CC converters C1, C2, C3 in shunted arrangement between r1 and r2, connected to a common point and each one supplying a set of differentiated loads Q1-Q6, the power of each converter being lower than that of the maximum consumption of the assigned loads, whose converters C1, C2, C3 are integrated in a master/slave architecture controlled from a control center M with a microcontroller managing the power to be sent to the loads by each one of said converters in a synchronized manner.

## Description

### Scope of the invention

The present invention generally refers to electric distribution systems for motorized vehicles and more specifically to those electric power supply and distribution systems comprising two networks at different voltage levels, known as dual voltage in the sector and hereinafter in this specification referred to as DV, applied in an automobile.

The invention also refers to a method for implementing said system.

Such DV systems typically comprise a first network at 14 V used for feeding low consumption loads, for example for lighting and supply of control signals, usually fed in turn from the second network at a higher voltage, typically 42 V, through a CC/CC electric converter or from a first battery B1. Said second 42 V network is used for feeding high consumption loads such as the starter motor, heating system, electromagnetic valve control, motors, such as those for the window control mechanism, seat adjustments, fans, etc. and is fed from a generator G (the vehicle's alternator) or from a second battery B2.

The invention is also applicable within the architectures implemented in the automobile sector for achieving a sectorization of power, a principle according to which a series of areas are defined in the vehicle, each one of which having a smart node locally controlling the loads and the switches and detectors, sending and receiving information through a multiplexed data bus, which allows for a large reduction not only in the number of wires, but also in their length, not to mention the decrease in the number of wires passing from one area of the vehicle to another, whose parameter significantly acts upon the ease in wiring the assembly.

### Background of the invention

DV systems for motorized vehicles have been disclosed in numerous patent and patent application documents, it being possible to mention the following: US 5,334,926, US 6,232,674, EP 337155, EP 539982, EP1033804, WO 99/22434 and WO 00/76812.

Also considered relevant for understanding DV technology is the document by Joan Fontanilles, Jordi Giró, Javier Maixé et. al, "New requirements for dual voltage CC/CC converter and power distribution system", United Technologies Automotive MAI S.A. and Rovira Virgili University Electrical and Automatic Control Engineering Department, Tarragona (Spain), published in the EAEC (European Automobile Engineers Cooperation) Congress, Barcelona 1999.

British patent application GB 2,342,515 discloses a DV architecture with two networks fed from respective batteries B1, B2, for a motorized vehicle, which, in addition to the generally unidirectional classic CC/CC converter for feeding the low voltage network from the higher voltage network, proposes the use of a second bi-directional converter for controlling the status of charge of the two batteries B1 and B2 for the purpose of adjusting the power flows between its inputs/outputs. Said second converter is used when, in addition to normal operation (to feed the lower voltage level network from the higher voltage level network), the low voltage network is fed from the battery connected to the higher voltage branch, the higher voltage network is fed from the two batteries B1, B2, or when the battery B1 feeding the low voltage branch is charged from the higher voltage network.

Although the use of two shunted converters, as the latter document discloses, is theoretically a feature it shares with the architecture proposed by the present invention, the invention, as will be explained below, is generally based on the use of more than two, one- or two-way CC/CC converters, and on a specific way of controlling them to reach a singular purpose, which is the equalization of the outputs of all the converters, the integration of said converter assembly within a sectorial design for the vehicle's power, and a rating of said converters that is below the requirements of the load set of the sector supplying each one of them. This determines several operating conditions of the electric distribution system where all CC/CC converters cooperate, all this non-existent in the technical guidelines disclosed by said British patent application GB 2,342,515.

### Brief description of the invention

The invention is thus based on an architecture in which the CC/CC conversion between the two networks at different voltage levels is subdivided into several shunted CC/CC converters, each one of them intended to supply a determined load set of a sector of the automobile. As is well known, such CC/CC converters are protected against short circuits consistent with the typical, characteristic V-I curve (foldback curve), such that if a short circuit occurs in any load (not controlled by a controlled switching device such as a SMART FET, relay or similar device) affecting said CC/CC converter, the converter will protect the network by setting the voltage to zero and not allowing the supply from the remaining loads. It is evident that in this situation the fuses lose their specific role due to the behavior of the CC/CC converter.

In order to prevent such drawback, according to the invention, the arrangement of a plurality of CC/CC converters in shunted connection is proposed, connected to a common point, whose point is likewise connected to the low voltage battery which, in the case of a short circuit, will act on the grounded load's fuse. In this manner, the power to be supplied is shared by the different converters into which it has been divided and the battery which will supply current helping the network if necessary is also shared.

In a preferred embodiment of the invention, in which the invention shows its full potential, it has been foreseen that the different CC/CC converters dynamically shift their working point in order to achieve the sharing of the same current. For such purposes, a central control, for example according to a master/slave architecture, whose control integrates a master microcontroller, will adjust the different voltage values and the information of the intensity values required by each load group at the expense of a corresponding CC/CC converter (acquired from a detector or a tapping point for each load set) will be exchanged with said control center using a CAN bus or the like.

Another feature of the invention is that each one of the converters is intended to feed a series or set of differentiated loads located in different areas of the vehicle, either in the highest voltage level network or in a network at a lower level, according to the power sectorization principle explained above, with the particularity that the CC/CC converters used have been designed such that the power that each one of them can supply is less than that of the maximum consumption of all said loads of the specific sector it feeds, such that the power supply to each load set is carried out at specified times at the expense of at least more than one of said different CC/CC converters. This follows the consideration that generally, very rarely will consumption on the part of all the system loads, and particularly of the different sectors, occur, which allows rating the converters at a lower value than that which would be necessary considering a simultaneous and continued consumption on the part of all the loads.

On the other hand, if several converters are connected at the same point and have as a load, for example, battery B1 which feeds the low voltage network, the power supplied by said battery can be divided by an n factor (depending on the vehicle's number of CC/CC converters), such that the converters can be identical and share the same output current. The battery will be responsible for supplying the load for blowing out the fuses. But this architecture will also divide the power conversion in whatever manner necessary.

For example, if a 500 W CC/CC converter is arranged in the vehicle's compartment but its nearest loads require 600 W, the converter will begin to protect itself by reducing the output voltage (according to a V-I curve of the converter or typical foldback wave); at this moment, the nearest CC/CC converter with the lowest connection resistance to the smart distribution node will supply the remaining necessary power. In this manner, it can be said that, in a static state, the n CC/CC converters used (for example 3, one for the motor compartment portion, another for the passenger area, and a third one for the rear portion of the vehicle) will try to share the same amount of power when the power required is close to the maximum of each one of said CC/CC converters. In the eventual case that the maximum power of all the converters is exceeded, then battery B1, or battery B2 where applicable, will provide the remaining power required.

In a dynamic state (a high speed transient or power fluctuation) and generally with frequencies greater than 100 Hz (for example, during a response to abruptly opening or closing the windows, flashes of light, etc.), a master/slave structure with microprocessor support is necessary so that all the CC/CC converters share the same current. Due to all the CC/CC converters being located in different areas of the vehicle, a bus, such as a CAN or VAN bus, can inform of the current required by the loads and processed by the different CC/CC converters so that the current can be shared in the face of transient phenomena. The speed of the bus and that of the communication protocol controlled by the microprocessor are critical factors, as well as detection method of the current, in order to configure the system according to the proposal of this invention.

Such a configuration with several CC/CC converters will also allow the converters to share the same thermal overloads due to dissipation, which can be modular.

To better understand the invention, a description thereof will be given with reference to several sheets of drawings in which several embodiment examples are shown, which are to be taken as merely illustrative and non-limiting of the scope of the proposed technical guideline. For purposes of simplifying the explanation, said drawings show two networks at different voltage levels, each one of them supporting a series of sectorized loads associated with the output of a corresponding CC/CC converter, although other arrangements, for example only with sectorized loads in the lower voltage level branch, or with only a part of the loads of the upper voltage branch sectorized, fall within the energy distribution system design being referred to.

### Brief description of the drawings

Figure 1 shows a schematic view of an architecture example according to the principles of the present invention, with the loads to be supplied by the system being distributed, and each set of loads being supplied by a converter.
Figure 2 shows the known converter V-I curve (foldback curve) explaining the protection against short circuits inherent to the converter, as a result of which the converter will tend to rapidly protect itself, setting its output voltage to zero against an intensity requirement greater than a certain level.
Figure 3 shows an architecture with control of the working point of the different converters from a control center according to the preferred embodiment of the invention disclosed in the claims.

### Detailed description of several embodiment examples

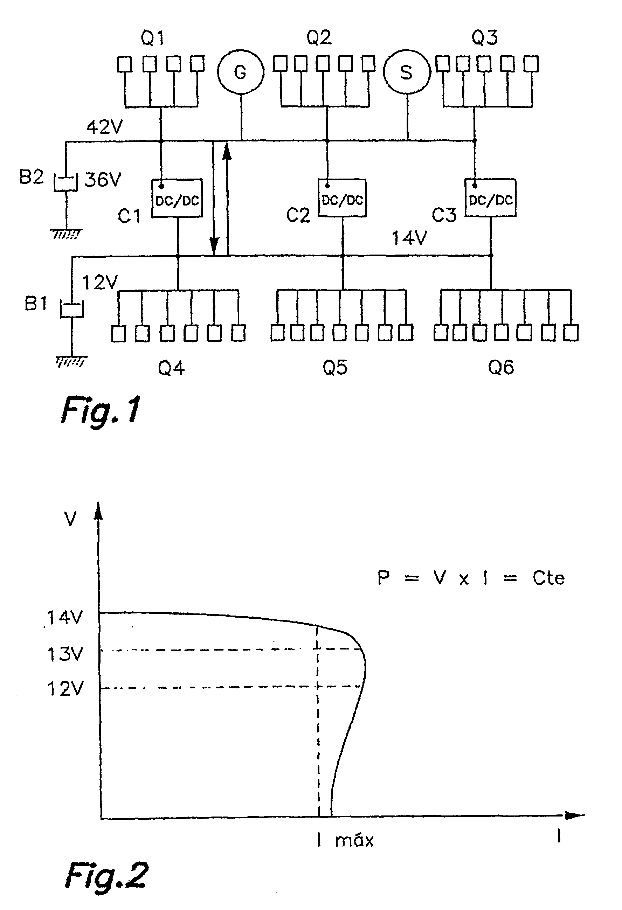

Figure 1 shows an electric distribution system in which a series of loads Q1 to Q6 to be supplied are sectorized in a first higher voltage level network r1, and specifically at 42 V, fed from a generator G (the vehicle's alternator) and which supplies a starter motor S, as well as a lower voltage network r2, providing 14 V. A series of converters C1, C2, C3 are shunted between said two networks r1, r2, with their outputs connected to a common point or output, fed from either of said batteries B1, B2. Such an arrangement is determinant in order that, the different converters C1, C2 and C3 being connected at the same point, and due to, for example, battery B1 feeding the low voltage network as a load, the power supplied by said battery B1 can be divided by a factor of 3, such that the converters C1-C3 can be identical and share the same output current. The battery will be responsible for supplying the load for blowing out the fuses. But this architecture will also divide the power conversion as needed.

As indicated in figure 1, the 42 V higher voltage level network is also connected to battery B2, to a generator G (the vehicle's alternator), and it is foreseen for supplying a starter motor S.

Figure 2 shows a converter's typical V-I curve, or of protection against short circuits, according to which if any load connected to the converter and not protected by a controlled switching device, such as a SMART FET, relay or the like, undergoes a short circuit affecting said CC/CC converter, the converter will protect the network by immediately setting the voltage to zero and not allowing the supply from the remaining loads. The shunted arrangement of converters C1, C2, C3 shown in figure 1, connected at a common point to which one of the batteries B1 or B2 is also connected, solves this drawback because the battery acts by blowing out the grounded load's fuse, and the power to be supplied is thus shared by the different converters C1, C2, C3.

In the lowest voltage branch of the loads, several loads have been schematized in the first group, being necessary to understand that their protection can be accomplished by fuses, by controlled switching devices such as SMART FET, or by a combination of both systems.

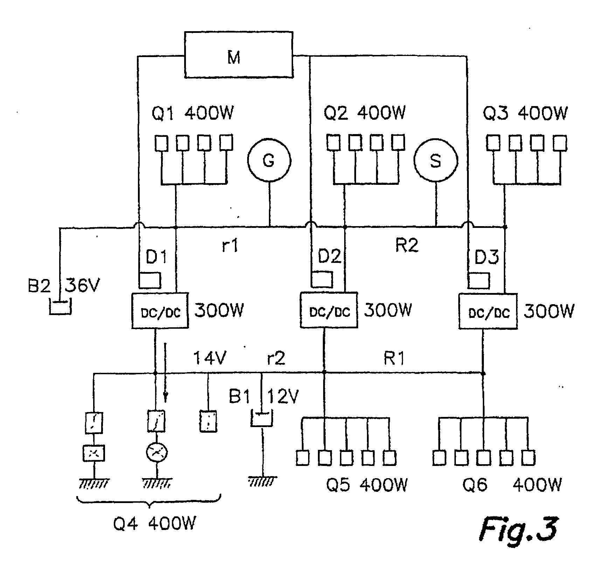

According to the preferred embodiment of the invention shown in figure 3, it has been foreseen that the CC/CC converters shift their working point in order to share the same current, for which purpose a central control M will adjust the different voltage ratings in the nodes to which the respective outputs of the CC/CC converters C1, C2, C3 are connected, and the information regarding the intensities required in each one of said nodes will be exchanged using a CAN bus, for example. More specifically, it has been foreseen that the system be implemented in a master/slave architecture in which said control center M integrating the microprocessor establishes itself as master and each one of the converters C1, C2, C3 as slave. Several detectors D1, D2, D3 have been provided for collecting the current required in either of the outputs of each CC/CC converter C1, C2, C3, whose information is sent to the control center, where the microcontroller has, for example, a management algorithm loaded into a suitable, programmable memory for distributing the power to be supplied among the different CC/CC converters C1-C3 for the purpose of achieving an equalized output from them. Thus, all the CC/CC converters used can be equal (in their modular design principle, leading to reduced manufacturing costs) and, for example, with a power that is lower than that of the load set to be supplied, as indicated in the figures given in this example.

For a full implementation of the disclosed electric power distribution system, with sectorized loads in both networks r1 and r2, it is necessary that at least two of the converters C1-C3 are two-way converters.

Although the arrangement shown in the embodiment example described up to this point with three converters C1, C2, C3 has been designed for a sectorization of the loads of an automotive vehicle in the front portion or motor area, the passenger area, and the rear portion or trunk, which may result to be very convenient, the loads can be sectorized very differently in practice, in a smaller or larger number of groups and also use a smaller or larger number of CC/CC converters.

## Claims

1. An electric distribution system for a vehicle with two networks at different voltage levels and an architecture in which at least a first of said networks is susceptible to being fed from the second voltage supply network through a CC/CC converter, one of said two networks being connected to a generator and at least one of said two networks being fed by energy storage means such as a battery, **characterized in that** it comprises several shunted CC/CC converters, connecting said first and second networks at different voltage levels, all of them connected at a common point or output, each one of whose CC/CC converters has a series or set of differentiated loads located in different areas of the vehicle assigned to it, belonging to at least the lower voltage network, the power that each one of said converters can supply being lower than that of the maximum consumption of all said loads it has assigned, such that the power supply to each load set will be carried out at certain moments at the expense of at least more than one of said different CC/CC converters or of a battery, and **in that** said converters, in order to supply different load groups located in different areas of the vehicle, are integrated in a master/slave architecture controlled from a control center or master, including a microcontroller with the capacity to manage the power to be sent at all times to the loads by each one of said converters in a synchronized manner, the connection between CC/CC converters, slaves, and control center including at least one communication bus such as a CAN or VAN bus, by means of which the needs of each load group are reported.

2. A system according to claim 1, **characterized in that** each one of the CC/CC converters has at least one tapping point for detecting the supply current required by the loads to be supplied and processed by each CC/CC converter, whose information is sent to said control center integrating the master, through said communication bus.

3. A system according to claim 2, **characterized in that** all said shunted converters are equal.

4. A system according to claim 1, **characterized in that** each one of said two networks includes a common connection point or output of the different converters and is also fed from a battery and each one of the load groups whose supply is assigned to a corresponding converter includes a protection means based on fuses in at least some of the loads of each set.

5. A system according to claim 1, **characterized in that** each one of said two networks includes a common connection point or output of the different converters and is also fed from a battery and each one of the load groups whose supply is assigned to a corresponding converter includes a protection means based on controlled switching devices such as FET transistors in at least some of the loads of each set.

6. A system according to claim 1, **characterized in that** each one of said two networks includes a common connection point or output of the different converters and is also fed from a battery and each one of the load groups whose supply is assigned to a corresponding converter includes a protection means based on controlled fuses for some of the loads and based on controlled switching devices such as FET transistors for others of said loads of each set thereof.

7. A system according to claim 1, **characterized in that** said first network is a lower voltage level network fed from a first battery and said second network is a higher voltage level network fed from a second battery.

8. A system according to claim 2, **characterized in that** at least two of said several CC/CC voltage converters are two-way converters.

9. A system according to claim 2, **characterized in that** said higher voltage network supplies a series of loads, also sectorized and associated to each one of said converters.

10. A method for electric distribution for a motorized vehicle with two networks at different voltage levels, wherein at least a first of said networks is fed from the second voltage supply network through a CC/CC converter, one of said two networks being connected to a generator and at least one of the two networks is fed by an energy storage means such as a battery, **characterized in that** it sends the power to the loads through a plurality of CC/CC converters in shunted arrangement between said two networks at different voltage levels with equalization of the outputs thereof by means of control of the output of each converter from a control center acting as master of a master/slave architecture, with the different CC/CC converters as slaves, integrating a microcontroller with the capacity to manage the power to be sent at all times to the loads on the part of each one of said converters in a synchronized manner, and the connection between CC/CC converters and control center including at least one communication bus, such as a CAN bus.

11. A method according to claim 10, **characterized in that** it carries out a permanent detection of the intensity required by each load set and processed by the corresponding converter assigned to said group, whose information is sent through said bus to the system's control center or master.
